# EUROPÄISCHE PATENTSCHRIFT

(11) **EP 3 815 171 B1**
(45) Veröffentlichungstag und Bekanntmachung des Hinweises auf die Patenterteilung: **02.08.2023**
(21) Anmeldenummer: 19727964.9
(22) Anmeldetag: 22.05.2019
(51) Int. Cl.: H01M 10/654, H01M 10/657, H01M 10/625, H01M 10/615

(54) **SPEICHERZELLE FÜR EINEN ENERGIESPEICHER EINES KRAFTFAHRZEUGS SOWIE ENERGIESPEICHER FÜR EIN KRAFTFAHRZEUG**
STORAGE CELL FOR AN ENERGY STORE OF A MOTOR VEHICLE, AND ENERGY STORE FOR A MOTOR VEHICLE
PILE D'ACCUMULATEUR POUR UN ACCUMULATEUR D'ÉNERGIE D'UN VÉHICULE AUTOMOBILE ET ACCUMULATEUR D'ÉNERGIE POUR UN VÉHICULE AUTOMOBILE

(30) Priorität: 28.06.2018 DE 102018210660
(43) Veröffentlichungstag der Anmeldung: 05.05.2021
(73) Patentinhaber: Bayerische Motoren Werke Aktiengesellschaft, 80809 München (DE)
(72) Erfinder: HAMMERSCHMIDT, Thomas, 85716 Unterschleissheim (DE); NUERNBERGER, Simon, 83043 Bad Aibling (DE); BAUER, Christoph, 80639 München (DE); SCHMIDT, Jan Philipp, 73271 Holzmaden (DE)
(86) Internationale Anmeldenummer: PCT/EP2019/063249
(87) Internationale Veröffentlichungsnummer: WO 2020/001869

(56) Entgegenhaltungen:
- WO-A2-2015/102708
- DE-A1- 1 671 855
- DE-A1-102016 208 062
- US-A- 3 823 037

## Beschreibung

Die Erfindung betrifft eine Speicherzelle zum Speichern von elektrischer Energie für einen Energiespeicher eines Kraftfahrzeugs gemäß dem Oberbegriff von Patentanspruch 1. Ferner betrifft die Erfindung einen zum Speichern von elektrischer Energie ausgebildeten Energiespeicher für ein Kraftfahrzeug.

Die DE 10 2013 221 747 A1 offenbart eine insbesondere als Lithium-Ionen-Batteriezelle ausgebildete Batteriezelle, mit einer negativen Elektrode, mit einem Separator und mit einer positiven Elektrode, welche in gewickelter Form vorliegen und von einer Zellwickelfolie umgeben sind. Dabei ist es vorgesehen, dass die Zellwickelfolie eine integrierte Heizung aufweist.

Des Weiteren ist aus der DE 10 2013 021 258 A1 eine Batteriezelle bekannt, mit einem Gehäuse und einer Heizvorrichtung. Dabei ist es vorgesehen, dass die Heizvorrichtung wenigstens ein flächiges Trägerelement mit wenigstens einem darin und/oder darauf angeordneten, elektrischen Heizelement aufweist. Außerdem ist das wenigste eine flächige Trägerelemente auf wenigstens einer Wandung des Gehäuses angeordnet. Des Weiteren offenbart die WO 2017/194373 A1 eine beheizbare Batterie. Außerdem offenbart die DE 10 2016 208 062 A1 eine beheizbare Batterie.

Aufgabe der vorliegenden Erfindung ist es, eine Speicherzelle und einen Energiespeicher der eingangs genannten Art derart weiterzuentwickeln, dass der Bauraumbedarf der Speicherzelle und des Energiespeichers in einem besonders geringen Rahmen gehalten werden kann.

Diese Aufgabe wird erfindungsgemäß durch eine Speicherzelle mit den Merkmalen des Patentanspruchs 1 sowie durch einen Energiespeicher mit den Merkmalen des Patentanspruchs 11 gelöst. Vorteilhafte Ausgestaltungen der Erfindung sind Gegenstand der abhängigen Ansprüche.

Ein erster Aspekt der Erfindung betrifft eine Speicherzelle für einen Energiespeicher eines Kraftfahrzeugs, insbesondere eines vorzugsweise als Personenkraftwagen ausgebildeten Kraftwagens. Die Speicherzelle ist beispielsweise als eine Batteriezelle ausgebildet, sodass der Energiespeicher beispielsweise als Batterie ausgebildet sein kann. Insbesondere kann die Speicherzelle, welche auch als Zelle oder Einzelzelle bezeichnet wird, als eine Lithium-Ionen-Zelle ausgebildet sein, sodass der Energiespeicher beispielsweise als Lithium-Ionen-Batterie ausgebildet sein kann. Insbesondere ist der Energiespeicher als eine Hochvolt-Komponente beziehungsweise als ein Hochvoltspeicher ausgebildet, wobei der Energiespeicher als eine Hochvolt-Batterie (HV-Batterie) ausgebildet sein kann. Ist der Energiespeicher als ein Hochvoltspeicher ausgebildet, so ist eine elektrische Spannung, insbesondere eine elektrische Betriebsspannung, die der Energiespeicher bereitstellt beziehungsweise aufweist, größer als 50 Volt. Vorzugsweise beträgt die elektrische Spannung, insbesondere die elektrische Betriebsspannung, mehrere hundert Volt, um dadurch beispielsweise besonders große elektrische Leistungen zum elektrischen Antreiben des Kraftfahrzeugs realisieren zu können. Insbesondere kann der Energiespeicher in seinem vollständig hergestellten Zustand mehrere, elektrisch miteinander verbundene Speicherzellen aufweisen, wobei die vorherigen und folgenden Ausführungen zur jeweiligen Speicherzelle auch auf die anderen Speicherzellen übertragen werden können und umgekehrt.

Die Speicherzelle weist ein Zellgehäuse und Speichermittel zum Speichern von elektrischer Energie beziehungsweise elektrischem Strom auf. Dabei sind die Speichermittel in dem Zellgehäuse aufgenommen. Somit kann mittels beziehungsweise in der Speicherzelle elektrische Energie gespeichert werden, sodass mittels des Energiespeichers beziehungsweise in dem Energiespeicher elektrische Energie gespeichert werden kann. Die Speichermittel umfassen beispielsweise wenigstens zwei Elektroden unterschiedliche Polarität sowie beispielsweise einen, beispielsweise flüssigen, Elektrolyten, in welchen die Elektroden zumindest teilweise, insbesondere zumindest überwiegend oder vollständig, eingetaucht beziehungsweise aufgenommen sind. Eine erste der Elektroden ist beispielsweise eine positive Elektrode, wobei die zweite Elektrode beispielsweise eine negative Elektrode ist. Die Speichermittel können ferner einen Separator aufweisen, welcher beispielsweise zwischen den Elektroden angeordnet ist. Mittels des Separators sind die Elektroden elektrisch voneinander isoliert. Die Elektroden können beispielsweise einen Elektrodenstapel bilden oder die Elektroden sind zu einem auch als Jelly-Roll bezeichneten Elektrodenwickel aufgewickelt. Dabei kann der Separator zwischen den Elektroden angeordnet sein, sodass der Separator beispielsweise zusammen mit den Elektroden zu dem Elektrodenwickel aufgewickelt ist.

Die Speicherzelle weist wenigstens einen außerhalb des Zellgehäuses angeordneten und auch als Terminal bezeichneten Anschluss auf, welcher beispielsweise gegenüber dem Zellgehäuse elektrisch isoliert ist. Über den Anschluss können die Speichermittel die mittels der Speichermittel gespeicherte elektrische Energie bereitstellen. Mit anderen Worten kann beispielsweise über den Anschluss die mittels der Speichermittel gespeicherte elektrische Energie abgegriffen und somit von der Speicherzelle abgeführt werden. Beispielsweise ist der Anschluss elektrisch mit einer der Elektroden verbunden, wobei vorzugsweise der Anschluss innerhalb des Zellgehäuses elektrisch mit der einen Elektrode verbunden ist.

Des Weiteren weist die Speicherzelle wenigstens einem innerhalb des Zellgehäuses angeordnetes elektrisches Heizelement zum Beheizen beziehungsweise Erwärmen der Speicherzelle auf. Mit anderen Worten ist das Heizelement elektrisch betreibbar, sodass mittels des Heizelements unter Nutzung von elektrischer Energie die Speicherzelle erwärmt werden kann. Ferner ist es denkbar, dass den Speichermitteln über den Anschluss elektrische Energie zugeführt werden kann, sodass die elektrische Energie, die den Speichermitteln über den Anschluss zugeführt wird, in die Speichermittel einspeicherbar ist. Mittels des elektrischen Heizelements und insbesondere durch ein mittels des elektrischen Heizelements bewirkbares Beheizen beziehungsweise Erwärmen der Speicherzelle ist er möglich, dass die Speicherzelle auch bei sehr geringen Umgebungs- beziehungsweise Außentemperaturen eine hinreichend hohe Temperatur aufweist, sodass die Speicherzelle die in ihr gespeicherte Energie besonders gut bereitstellen kann beziehungsweise sodass elektrische Energie besonders gut in die Speicherzelle eingespeichert beziehungsweise in der Speicherzelle gespeichert werden kann.

Um nun den Bauraumbedarf der Speicherzelle und somit des Energiespeichers insgesamt in einem besonders geringen Rahmen halten und dabei dennoch eine vorteilhafte Beheizung der Speicherzelle auf bauraumgünstige Weise realisieren zu können, ist es erfindungsgemäß vorgesehen, dass das Zellgehäuse wenigstens oder genau einen Verbindungsbereich aufweist, in welchem das Heizelement innerhalb des Zellgehäuses elektrisch mit dem Zellgehäuse verbunden ist. Mit anderen Worten ist das Heizelement mit dem Verbindungsbereich innerhalb des Zellgehäuses elektrisch verbunden, sodass das Heizelement mit dem Zellgehäuse innerhalb des Zellgehäuses elektrisch verbunden ist. Das Heizelement weist beispielsweise wenigstens ein Anschlusselement auf, über welches das Heizelement mit elektrischer Energie zum Beheizen der Speicherzelle versorgt werden kann. Dabei ist beispielsweise innerhalb des Zellgehäuses das Anschlusselement elektrisch mit dem Verbindungsbereich und somit elektrisch mit dem Zellgehäuse verbunden, sodass beispielsweise das Heizelement unter Vermittlung des Zellgehäuses mit elektrischer Energie zum Beheizen der Speicherzelle versorgt und dadurch betrieben werden kann. Da das Anschlusselement des Heizelements innerhalb des Zellgehäuses elektrisch mit dem Verbindungsbereich und somit mit dem Zellgehäuse verbunden ist, kann vermieden werden, dass das Anschlusselement beziehungsweise das Heizelement aus dem Zellgehäuse an dessen Umgebung herausgeführt werden muss, sodass der Bauraumbedarf der Speicherzelle in einem besonders geringen Rahmen gehalten werden kann. Dabei hat es sich als besonders vorteilhaft gezeigt, wenn der Elektrolyt gegenüber dem Zellgehäuse elektrisch isoliert ist. Hierzu ist beispielsweise innerhalb des Zellgehäuses ein elektrischer Isolator angeordnet, mittels welchem der Elektrolyt gegen das Zellgehäuse elektrisch isoliert ist. Der elektrische Isolator ist beispielsweise auf das Zellgehäuse, insbesondere auf eine dem Elektrolyt beziehungsweise den Speichermitteln zugewandte innenumfangsseitige Mantelfläche aufgebracht, insbesondere aufgetragen, sodass beispielsweise die innenumfangsseitige Mantelfläche des Zellgehäuses mit dem elektrischen Isolator versehen ist.

Um dabei das Heizelement auf besonders bauraumgünstige Weise mit elektrischer Energie versorgen zu können, weist die erfindungsgemäße Speicherzelle außerdem wenigstens eine Verbindungseinrichtung auf. Die Verbindungseinrichtung umfasst zumindest ein Verbindungselement, welches vorzugsweise vollständig außerhalb des Zellgehäuses angeordnet ist. das Verbindungselement weist einen aus einem ersten Werkstoff gebildeten und außerhalb des Zellgehäuses elektrisch mit dem Zellgehäuse verbundenen ersten Verbindungsteil auf. Das Verbindungselement ist vorzugsweise vollständig außerhalb des Zellgehäuses aufgenommen, sodass der vorzugsweise vollständig außerhalb des Zellgehäuses angeordnete erste Verbindungsteil elektrisch mit dem Zellgehäuse verbunden ist. Somit ist der erste Verbindungsteil außerhalb des Zellgehäuses elektrisch mit dem Zellgehäuse verbunden. Insbesondere kann vorgesehen sein, dass der erste Verbindungsteil in dem Verbindungsbereich außerhalb des Zellgehäuses elektrisch mit dem Zellgehäuse verbunden ist, sodass beispielsweise der erste Verbindungsteil elektrisch mit dem Verbindungsbereich und somit elektrisch mit dem Zellgehäuse verbunden ist. Auf diese Weise ist das in dem Zellgehäuse angeordnete Heizelement unter Vermittlung des Zellgehäuses elektrisch mit dem ersten Verbindungsteil verbunden.

Des Weiteren weist das Verbindungselement einen zumindest elektrisch mit dem ersten Verbindungsteil verbundenen zweiten Verbindungsteil auf, welcher aus einem von dem ersten Werkstoff unterschiedlichen zweiten Werkstoff gebildet ist. Der erste Werkstoff ist beispielsweise ein metallischer Werkstoff. Alternativ oder zusätzlich ist der zweite Werkstoff ein metallischer Werkstoff. Das Zellgehäuse ist beispielsweise aus einem Material gebildet, wobei vorgesehen sein kann, dass das Material dem ersten Werkstoff entspricht beziehungsweise umgekehrt. Bei dem ersten Werkstoff und/oder dem Material kann es sich um einen metallischen Werkstoff wie beispielsweise ein Leichtmetall, insbesondere um Aluminium, handeln. Bei dem zweiten Werkstoff kann es sich beispielsweise um Kupfer handeln. Da die Verbindungsteile elektrisch miteinander verbunden sind, kann elektrische Energie beziehungsweise elektrischer Strom von einem der Verbindungsteile auf den jeweiligen anderen Verbindungsteil fließen beziehungsweise umgekehrt. Insbesondere dann sind die Verbindungsteile mechanisch miteinander verbunden und somit aneinander gehalten, sodass das Verbindungselement beispielsweise eine zusammengebaute beziehungsweise zusammenhängende Baueinheit beziehungsweise Komponente ist.

Um das Heizelement auf besonders bauraumgünstige Weise und bedarfsgerecht aktivieren und deaktivieren zu können, weist die Verbindungseinrichtung darüber hinaus wenigstens ein, insbesondere außerhalb des Zellgehäuses, mit dem zweiten Verbindungsteil elektrisch verbundenes Schaltelement auf, welches vorzugsweise vollständig außerhalb des Zellgehäuses angeordnet ist. Mittels des Schaltelements ist der zweite Verbindungsteil mit dem Anschluss der Speicherzelle elektrisch verbindbar und von dem Anschluss trennbar. Das Schaltelement ist beispielsweise zwischen wenigstens einem Verbindungszustand und wenigstens einem Trennzustand umschaltbar. In dem Verbindungszustand ist der zweite Verbindungsteil über das Schaltelement elektrisch mit dem Anschluss verbunden, sodass von den Speichermitteln bereitgestellte und insbesondere zu dem beziehungsweise auf den Anschluss fließende elektrische Energie von dem Anschluss über das Schaltelement auf den zweiten Verbindungsteil übertragen werden kann beziehungsweise übertragen wird. Die elektrische Energie kann dann von dem zweiten Verbindungsteil auf den ersten Verbindungsteil und von dem ersten Verbindungsteil über das Zellgehäuse auf das Heizelement beziehungsweise auf das Anschlusselement und dann auf das Heizelement übertragen werden, sodass das Heizelement mit mittels der Speichermittel gespeicherter und von den Speichermitteln bereitgestellter elektrischer Energie versorgt werden kann beziehungsweise versorgt wird. Hierdurch ist das Heizelement aktiviert, wodurch die Speicherzelle mittels des Heizelements beheizt wird. Insgesamt ist erkennbar, dass in dem Verbindungszustand des Schaltelements eine elektrische Verbindung zwischen dem zweiten Verbindungsteil und dem Anschluss über das Schaltelement geschlossen ist, sodass eine elektrische Verbindung zwischen dem Heizelement und dem Anschluss über das Schaltelement geschlossen ist.

In dem Trennzustand jedoch ist die zuvor beschriebene elektrische Verbindung zwischen dem zweiten Verbindungsteil und dem Anschluss beziehungsweise zwischen dem Heizelement und dem Anschluss durch das Schaltelement unterbrochen beziehungsweise geöffnet, da das Schaltelement geöffnet ist. Somit unterbleibt eine Versorgung des Heizelements mit mittels der Speichermittel gespeicherter elektrischer Energie, sodass beispielsweise in dem Trennzustand das Heizelement deaktiviert ist. Somit unterbleibt eine mittels es Heizelements bewirkte Erwärmung der Speicherzelle. In der Folge kann mittels des Schaltelements das Heizelement besonders bedarfsgerecht und auf bauraumgünstige Weise deaktiviert und aktiviert werden, sodass eine bedarfsgerechte Beheizung der Speicherzelle realisiert werden kann. Ein weiterer Vorteil ist, dass das Verbindungselement dadurch, dass es die aus voneinander unterschiedlichen Werkstoffen gebildeten Verbindungsteile aufweist, besonders vorteilhaft sowohl mit dem Zellgehäuse als auch mit dem Schaltelement zumindest elektrisch sowie vorzugsweise auch mechanisch verbunden werden kann. Insbesondere werden der erste Werkstoff und das Material derart gewählt, dass der erste Werkstoff und das Material im Hinblick auf eine einfache Verschweißung des Zellgehäuses mit dem ersten Verbindungsteil zueinander passen. Außerdem kann beispielsweise der zweite Werkstoff derart gewählt werden, dass er zu dem Schaltelement im Hinblick auf eine einfache Verbindung, insbesondere Verschweißung, des zweiten Verbindungsteils mit dem Schaltelement passt.

Die erfindungsgemäße Speicherzelle ermöglicht einen besonders hohen Integrationsgrad, die Realisierung kurzer Stromleitpfade sowie die Realisierung einer sehr guten thermischen Anbindung des Schaltelements, sodass beispielsweise übermäßige Temperaturen des Schaltelements vermieden werden können. Darüber hinaus ist beispielsweise eine zellindividuelle Ansteuerung des Heizelements darstellbar. Dies bedeutet, dass beispielsweise das jeweilige Heizelement unabhängig von den jeweils anderen Heizelementen der anderen Speicherzellen aktiviert beziehungsweise deaktiviert werden kann. Eine solche jeweilige Ansteuerung des jeweiligen Heizelements wird beispielsweise über einen Kontrollchip geregelt, welcher beispielsweise auch eine Zellkerntemperatur der jeweiligen Speicherzelle ermitteln, insbesondere erfassen, kann. Somit kann eine exakte Heizzeit, während welcher die Speicherzelle mittels des Heizelements erwärmt wird, exakt eingestellt, insbesondere gesteuert oder geregelt, werden. Auf diese Weise ist ein so genanntes Balancing der Speicherzellen darstellbar. Unter Balancing ist zu verstehen, dass Temperaturunterschiede und/oder Ladungsunterschied zwischen den Speicherzellen untereinander ausgeglichen werden können, sodass im Energiespeicher insgesamt eine zumindest im Wesentlichen homogene Temperaturverteilung gewährleistet werden kann. Ferner ermöglicht das Schaltelement eine besonders gute Ansteuerung des als zellinterne Heizung ausgebildeten Heizelements, wobei eine Integration von Schalterelementen an beziehungsweise in die Speicherzelle oder an beziehungsweise in den auch als Zellterminal bezeichneten Anschluss vermieden werden kann.

Um den Bauraumbedarf besonders gering halten zu können, kann vorgesehen sein, dass die Verbindungseinrichtung und der Anschluss auf derselben Seite der Speicherzelle beziehungsweise des Zellgehäuses angeordnet sind.

Bei einer besonders vorteilhaften Ausführungsform der Erfindung ist das Schaltelement auf einer dem Zellgehäuse in eine erste Richtung abgewandten Seite des ersten Verbindungsteils angeordnet. Somit ist beispielsweise das erste Verbindungsteil in eine der ersten Richtung entgegengesetzte Richtung zumindest teilweise zwischen dem Schaltelement und dem Zellgehäuse angeordnet. Dabei überragt zumindest ein Teilbereich des ersten Verbindungsteils das Schaltelement in eine schräg oder senkrecht zur ersten Richtung verlaufende zweite Richtung. Insbesondere kann vorgesehen sein, dass zumindest der Teilbereich des ersten Verbindungsteils entlang einer mit der zweiten Richtung zusammenfallenden Erstreckungsrichtung breiter als das Schaltelement ist. Dabei ist der erste Verbindungsteil in dem Teilbereich mit dem Zellgehäuse, insbesondere mit dem Verbindungsbereich des Zellgehäuses, mechanisch und elektrisch verbunden. Auf diese Weise können der erste Verbindungsteil und somit das Verbindungselement insgesamt auf besonders einfache, bauraum- und kostengünstige Weise mechanisch und auch elektrisch an das Zellgehäuse angebunden werden.

Dabei hat es sich als besonders vorteilhaft gezeigt, wenn der erste Verbindungsteil in dem Teilbereich mit dem Zellgehäuse verschweißt und dadurch elektrisch und mechanisch mit dem Zellgehäuse verbunden ist. Insbesondere kann der erste Verbindungsteil in dem Teilbereich mit dem Verbindungsbereich des Zellgehäuses verschweißt und dadurch elektrisch und mechanisch mit dem Verbindungsbereich des Zellgehäuses verbunden sein. Hierdurch kann eine besonders bauraum- und kostengünstige, mechanische und elektrische Anbindung des Verbindungselements an das Zellgehäuse gewährleistet werden.

Um den Bauraumbedarf und die Kosten der Speicherzelle und somit des Energiespeichers besonders geringe halten zu können, ist es in weiterer Ausgestaltung der Erfindung vorgesehen, dass der erste Verbindungsteil von der Seite her mit dem Zellgehäuse, insbesondere mit dem Verbindungsbereich, verschweißt ist. Die Seite weist beispielsweise in Einbaulage der Speicherzelle in Fahrzeughochrichtung nach oben, wobei die Speicherzelle ihre Einbaulage in vollständig hergestelltem Zustand des Kraftfahrzeugs einnimmt. Auf diese Weise ist es möglich, den ersten Verbindungsteil und somit das Verbindungselement in Fahrzeughochrichtung von oben her und somit auf besonders einfache und kostengünstige Weise mit dem Zellgehäuse zu verschweißen.

Eine weitere Ausführungsform zeichnet sich dadurch aus, dass die Verbindungseinrichtung ein zweites Verbindungselement aufweist, welches einen aus einem dritten Werkstoff gebildeten und, insbesondere außerhalb des Zellgehäuses, mit dem Schaltelement elektrisch verbundenen dritten Verbindungsteil und einen elektrisch mit dem dritten Verbindungsteil verbundenen und aus einem von dem dritten Werkstoff unterschiedlichen vierten Werkstoff gebildeten vierten Verbindungsteil aufweist. Vorzugsweise ist das zweite Verbindungselement vollständig außerhalb des Zellgehäuses angeordnet. Der vierte Verbindungsteil ist außerhalb des Zellgehäuses elektrisch mit dem Anschluss verbunden. Vorzugsweise sind der dritte Verbindungsteil und der vierte Verbindungsteil auch mechanisch miteinander verbunden und dadurch aneinander gehalten, sodass vorzugsweise auch das zweite Verbindungselement eine zusammengebaute beziehungsweise zusammenhängende und dadurch einfach handhabbare Baueinheit ist. Ferner ist es vorzugsweise vorgesehen, dass der vierte Verbindungsteil auch mechanisch mit dem Anschluss verbunden ist und/oder der vierte Verbindungsteil ist mechanisch mit dem Schaltelement verbunden. Ferner ist es vorzugsweise vorgesehen, dass der zweite Verbindungsteil mechanisch mit dem Schaltelement verbunden ist. Durch die Verwendung des zweiten Verbindungselements kann eine besonders bauraumgünstige und eine besonders einfache, zumindest elektrische Anbindung des Schaltelements an den Anschluss außerhalb des Zellgehäuses gewährleistet werden. Insbesondere ist es dadurch möglich, den dritten Werkstoff derart auszuwählen, dass er im Hinblick auf eine einfache elektrische und/oder mechanische und/oder stoffschlüssige Verbindung, insbesondere Verlötung und/oder Verschweißung, mit dem Schaltelement passend ist. Ferner kann der vierte Werkstoff derart gewählt werden, dass er im Hinblick auf eine einfache Verschweißung mit dem Anschluss passend ist, sodass das Verbindungselement auf besonders einfache und bauraumgünstige Weise zumindest elektrisch und vorzugsweise auch mechanisch sowohl mit dem Schaltelement als auch mit dem Anschluss verbunden werden kann.

Bei dem dritten Werkstoff kann es sich um Kupfer handeln. Alternativ oder zusätzlich kann es sich bei dem vierten Werkstoff um ein Leichtmetall wie beispielsweise Aluminium handeln. Insbesondere ist es möglich, dass der dritte Werkstoff ein metallischer Werkstoff ist. Alternativ oder zusätzlich ist der vierte Werkstoff ein metallischer Werkstoff. Der jeweilige erste, zweite, dritte und vierte Werkstoff ist vorzugsweise ein elektrisch leitender, beziehungsweise ein elektrisch leitfähiger Werkstoff.

Um den Bauraumbedarf und die Kosten in einem besonders geringen Rahmen halten zu können, ist es in weiterer Ausgestaltung der Erfindung vorgesehen, dass der erste Werkstoff dem vierten Werkstoff entspricht.

Eine weitere Ausführungsform zeichnet sich dadurch aus, dass der zweite Werkstoff dem dritten Werkstoff entspricht. Dadurch können die Kosten und der Bauraumbedarf in einem besonders geringen Rahmen gehalten werden.

In weiterer Ausgestaltung der Erfindung weist das Schaltelement eine, insbesondere starre, Platine auf, welche vorzugsweise formstabil beziehungsweise eigensteif ist. Auf der Platine ist wenigstens ein Schalter des Schaltelements angeordnet, wobei der Schalter vorzugsweise elektrisch mit der Platine verbunden ist. Insbesondere ist der Schalter an der Platine gehalten. Der Schalter kann beispielsweise zwischen dem Verbindungszustand und dem Trennzustand umgeschaltet, insbesondere bewegt, werden. Vorzugsweise ist der Schalter als ein MOSFET ausgebildet, sodass der Schalter besonders vorteilhaft und bedarfsgerecht geöffnet und geschlossen werden kann. Dabei ist die Platine, insbesondere außerhalb des Zellgehäuses, elektrisch mit dem zweiten Verbindungsteil verbunden. Dadurch kann besonders vorteilhaft elektrischer Strom zwischen der Platine und dem zweiten Verbindungsteil übertragen werden, sodass besonders vorteilhaft elektrischer Strom von dem Anschluss über die Platine an das Heizelement übertragen werden kann. Dabei ist der zweite Verbindungsteil elektrisch und vorzugsweise auch mechanisch mit der Platine verbunden, wobei vorzugsweise der zweite Verbindungsteil mit der Platine stoffschlüssig verbunden, insbesondere verlötet, ist.

Eine weitere Ausführungsform zeichnet sich dadurch aus, dass die Platine, insbesondere außerhalb des Zellgehäuses, elektrisch mit dem dritten Verbindungsteil verbunden ist. Dadurch kann eine besonders vorteilhafte Stromübertragung gewährleistet werden. Insbesondere ist der dritte Verbindungsteil elektrisch sowie vorzugsweise mechanisch mit der Platine verbunden, wobei der dritte Verbindungsteil mit der Platine verlötet sein kann.

Um einen besonders bauraum- und kostengünstigen Aufbau des Energiespeichers insgesamt realisieren zu können, ist es in weiterer Ausgestaltung der Erfindung vorgesehen, dass die Speicherzelle wenigstens einen elastisch verformbaren und zumindest elektrisch sowie vorzugsweise auch mechanisch mit der Platine verbundenen elektrischen Leiter aufweist, über welchen die Platine mit wenigstens einer weiteren Komponente elektrisch verbindbar ist, wobei die Platine steifer beziehungsweise starrer als der Leiter ist. Dies bedeutet, dass der elektrische Leiter mittels einer auf den elektrischen Leiter wirkenden Kraft elastisch verformbar ist, wobei diese Kraft noch zu keiner Verformung, insbesondere elastischen Verformung, der Platine führen würde. Die Platine und der elektrische Leiter bilden eine so genannte Starr-Flex-Platine, da die Platine wesentlich steifer beziehungsweise starrer als der elektrische Leiter ist und gegenüber dem elektrischen Leiter nicht elastisch verformt werden kann. Gegenüber der Platine kann der Leiter wesentlich leichter beziehungsweise mit wesentlich geringeren Kräften elastisch verformt werden, sodass der elektrische Leiter eine besonders vorteilhafte und elektrische Verbindung zwischen der Platine und der Komponente ermöglicht. Kommt es beispielsweise während eines Betriebs des Energiespeichers zu thermisch bedingten Relativbewegungen zwischen der Platine und der Komponente, so kann der elektrische Leiter durch diese Relativbewegungen elastisch und somit zerstörungsfrei verformt werden, sodass der elektrische Leiter die Relativbewegungen mit ausführt beziehungsweise ermöglicht. In der Folge bleiben die Komponente und die Platine auch während der Relativbewegungen elektrisch miteinander verbunden, und zwar über den elektrischen Leiter.

Bei der weiteren Komponente handelt es sich beispielsweise um eine Platine eines Schaltelements einer weiteren Speicherzelle des Energiespeichers, sodass beispielsweise das Heizelement der weiteren Speicherzelle über den elektrischen Leiter besonders vorteilhaft mit elektrischer Energie versorgt werden kann und/oder dass die Platine beziehungsweise das Schaltelement der weiteren Komponente über den elektrischen Leiter angesteuert werden kann, um dann, im angesteuerten, geschlossenen Zustand, das Heizelement mit elektrischer Energie aus dem mit der Komponente verbundenen Energiespeichers zu versorgen.

Beispielsweise ist die Komponente von der Platine beabstandet angeordnet, sodass ein entlang wenigstens einer Raumrichtung verlaufender Abstand zwischen der Komponente und der Platine vorgesehen ist. Dabei weist der elektrische Leiter vorzugsweise eine Länge auf, welche größer als der Abstand ist, sodass der elektrische Leiter beispielsweise thermisch bedingte Änderungen des Abstands zerstörungsfrei mit ausführen kann, indem der elektrische Leiter elastisch verformt wird. Hierzu weist der Leiter beispielsweise zumindest in einem Längenbereich einen zickzackförmigen und/oder vorzugsweise wellenförmigen Verlauf auf, welcher bei einer Vergrößerung des Abstands gestreckt beziehungsweise gelenkt und bei einer Verkleinerung des Abstands gestaucht wird. Hierdurch können die Komponente und die Platine elektrisch miteinander verbunden bleiben, während sie sich, beispielsweise thermisch bedingt, relativ zueinander bewegen.

Ein zweiter Aspekt der Erfindung betrifft einen Energiespeicher für ein Kraftfahrzeug. Der erfindungsgemäße Energiespeicher weist wenigstens eine erfindungsgemäße Speicherzelle oder mehrere erfindungsgemäße Speicherzellen auf, welche vorzugsweise elektrisch miteinander verbunden sind. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Einzelheiten der Erfindung ergeben sich aus der nachfolgenden Beschreibung eines bevorzugten Ausführungsbeispiels mit den zugehörigen Zeichnungen.

Dabei zeigt:
- Fig. 1: eine schematische Explosionsansicht einer erfindungsgemäßen Speicherzelle zum Speichern von elektrischer Energie für einen Energiespeicher eines Kraftfahrzeugs;
- Fig. 2: ausschnittsweise eine schematische Seitenansicht der Speicherzelle;
- Fig. 3: eine schematische Draufsicht der Speicherzelle;
- Fig. 4: eine schematische Draufsicht einer Verbindungseinrichtung der Speicherzelle; und
- Fig. 5: eine schematische Draufsicht von Verbindungseinrichtungen von jeweiligen Speicherzellen.

In den Fig. sind gleiche oder funktionsgleiche Elemente mit gleichen Bezugszeichen versehen.

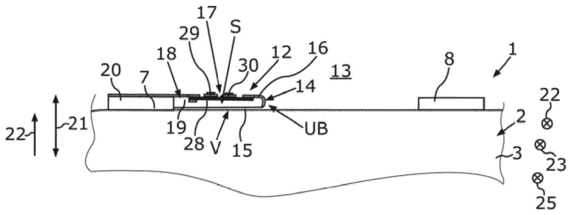

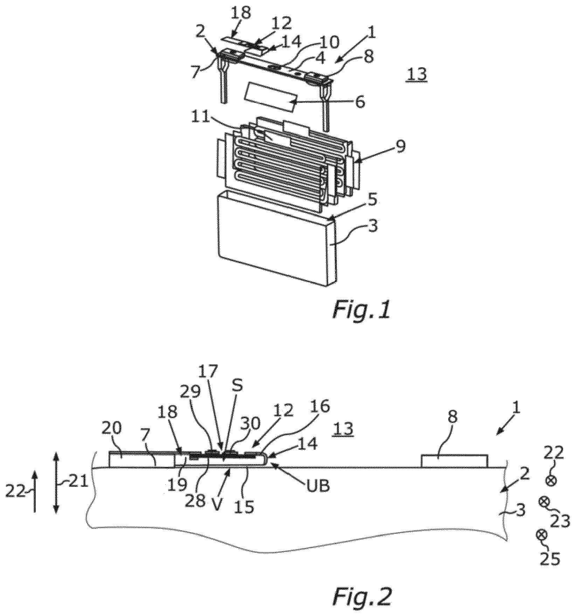

Fig. 1 zeigt in einer schematischen Explosionsansicht eine Speicherzelle 1 für einen Energiespeicher eines Kraftfahrzeugs, insbesondere eines beispielsweise als Personenkraftwagen ausgebildeten Kraftwagens. Das Kraftfahrzeug weist in seinem vollständig hergestellten Zustand wenigstens eine elektrische Maschine auf, mittels welcher das Kraftfahrzeug elektrisch angetrieben werden kann. Zum elektrischen Antreiben des Kraftfahrzeugs wird die elektrische Maschine mit elektrischer Energie beziehungsweise elektrischem Strom versorgt, die beziehungsweise der in dem Energiespeicher gespeichert ist. Der Energiespeicher weist dabei beispielsweise mehrere Speicherzellen auf, welche wie die Speicherzelle 1 ausgebildet sind beziehungsweise die Speicherzelle 1 ist eine der Speicherzellen des Energiespeichers. Die Speicherzellen des Energiespeichers sind elektrisch miteinander verbunden, sodass der Energiespeicher eine besonders große elektrische Spannung, insbesondere elektrische Betriebsspannung, bereitstellen kann, um besonders große elektrische Leistungen zum elektrischen Antreiben des Kraftfahrzeugs realisieren zu können. Vorzugsweise beträgt die elektrische Spannung des Energiespeichers mehrere hundert Volt.

Die Speicherzelle 1 weist ein Zellgehäuse 2 auf, welches einfach auch als Gehäuse bezeichnet wird. Das Zellgehäuse 2 weist ein auch als Can bezeichnetes erstes Gehäuseteil 3 und ein auch als Cap bezeichnetes zweites Gehäuseteil 4 auf. die Gehäuseteile 3 und 4 sind beispielsweise separat voneinander ausgebildete und miteinander verbundene Bauelemente. Das Gehäuseteil 4 wird auch als Deckel bezeichnet. Das Zellgehäuse 2 begrenzt in seinem vollständig hergestellten Zustand einen Aufnahmeraum 5, in welchem in Fig. 1 besonders schematisch dargestellte Speichermittel 6 zum Speichern von elektrischer Energie aufgenommen sind. Die Speichermittel 6 umfassen beispielsweise wenigstens oder genau zwei Elektroden unterschiedlicher Polarität sowie einen insbesondere flüssigen Elektrolyten, in welchem die Elektroden zumindest teilweise aufgenommen sind. Ferner können die Speichermittel 6 einen Separator umfassen, welcher zwischen den Elektroden angeordnet ist. Dadurch sind die Elektroden mittels des Separators elektrisch voneinander isoliert. Eine ersten der Elektroden ist beispielsweise eine positive Elektrode, wobei die zweite Elektrode eine negative Elektrode ist.

Die Speicherzelle 1 weist darüber hinaus Anschlüsse 7 und 8 auf, welche auch als Terminals bezeichnet werden und zumindest teilweise außerhalb des Zellgehäuses 2 angeordnet sind. Die Anschlüsse 7 und 8 sind dabei an dem Gehäuseteil 4 gehalten und beispielsweise gegenüber dem Zellgehäuse 2 elektrisch isoliert. Die positive Elektrode ist beispielsweise innerhalb des Zellgehäuses 2 elektrisch mit dem Anschluss 7 verbunden, während die negative Elektrode innerhalb des Zellgehäuses 2 elektrisch mit dem Anschluss 8 verbunden ist. Somit bildet beispielsweise der Anschluss 7 einen elektrischen Pluspol der Speicherzelle 1, während der Anschluss 8 einen elektrischen Minuspol der Speicherzelle 1 bildet. Die Speichermittel 6 können die mittels der Speichermittel 6 gespeicherte elektrische Energie über die Anschlüsse 7 und 8 bereitstellen, wodurch beispielsweise die elektrische Maschine mit der mittels der Speichermittel 6 gespeicherten elektrischen Energie versorgt werden kann.

Die Speicherzelle 1 weist ferner wenigstens ein in dem Aufnahmeraum 5 und somit innerhalb des Zellgehäuses 2 angeordnetes elektrisches Heizelement 9 auf, mittels welchem die Speicherzelle 1 unter Nutzung von elektrischer Energie beheizt und somit erwärmt werden kann. Aus Fig. 1 ist erkennbar, dass innerhalb des Zellgehäuses 2 mehrere elektrische Heizelemente 9angeordnet sein können. Des Weiteren ist an dem Gehäuseteil 4 eine Berstmembran 10 vorgesehen, mittels welcher der Aufnahmeraum 5 beispielsweise bei einem thermischen Ereignis gezielt entlüftet werden kann. Dadurch kann ein unkontrolliertes Explodieren der Speicherzelle 1 sicher vermieden werden. Am Beispiel der Speicherzelle 1 ist erkennbar, dass die Speicherzellen des Energiespeichers jeweils wenigstens ein elektrisches Heizelement wie das elektrische Heizelement 9 aufweisen kann.

Um nun den Bauraumbedarf der Speicherzelle 1 und somit des Energiespeichers insgesamt in einem besonders geringen Rahmen halten zu können, weist das Zellgehäuse 2, insbesondere das Gehäuseteil 4 einen Verbindungsbereich V auf, in welchem das Heizelement 9 innerhalb des Zellgehäuses 2 elektrisch mit dem Zellgehäuse 2 verbunden ist. Hierzu weist beispielsweise das Heizelement 9 ein Anschlusselement 11 auf. Das Anschlusselement 11 ist zumindest elektrisch sowie vorzugsweise auch mechanisch mit dem Verbindungsbereich V und somit mit dem Zellgehäuse 2 verbunden. Dadurch kann beispielsweise das Anschlusselement 11 unter Vermittlung des Zellgehäuses 2 mit elektrischer Energie versorgt werden, die somit unter Vermittlung des Zellgehäuses 2 und über das Anschlusselement 11 dem Heizelement 9 zugeführt werden kann. Mittels dieser dem Heizelement 9 zugeführten elektrischen Energie kann das Heizelement 9 betrieben werden, sodass mittels der dem Heizelement 9 zugeführten elektrischen Energie die Speicherzelle 1 beheizt werden kann. Wird das elektrische Heizelement 9 mit elektrischer Energie versorgt, so ist das elektrische Heizelement 9 aktiviert. In der Folge wird die Speicherzelle 1 mittels des elektrischen Heizelements 9 beheizt. Unterbleibt ein Versorgen des Heizelements 9 mit elektrischer Energie, so ist das Heizelement 9 deaktiviert, sodass ein durch das Heizelement 9 bewirktes Beheizen der Speicherzelle 1 unterbleibt.

Beispielsweise ist das Anschlusselement 11 mit dem Verbindungsbereich V und somit mit dem Zellgehäuse 2 verschweißt, wodurch das Anschlusselement 11 und somit das Heizelement 9 elektrisch sowie vorzugsweise auch mechanisch mit dem Zellgehäuse 2, insbesondere mit dem Gehäuseteil 4, verbunden ist.

Außerdem weist die Speicherzelle 1 wenigstens oder vorzugsweise genau eine Verbindungseinrichtung 12 auf. Die Verbindungseinrichtung 12 ist vorzugsweise vollständig außerhalb des Zellgehäuses 2 und somit in dessen Umgebung 13 angeordnet. Die Verbindungseinrichtung 12 weist ein erstes Verbindungselement 14 auf, welches einen aus einem ersten Werkstoff gebildeten und außerhalb des Zellgehäuses 2 elektrisch mit dem Zellgehäuse 2 verbundenen ersten Verbindungsteil 15 und einen elektrisch und auch mechanisch mit dem ersten Verbindungsteil verbundenen und aus einem von dem ersten Werkstoff unterschiedlichen zweiten Werkstoff gebildeten zweiten Verbindungsteil 16 aufweist. Bei dem in den Fig. veranschaulichten Ausführungsbeispiel ist der erste Werkstoff Aluminium, während der zweite Werkstoff Kupfer ist. Des Weiteren umfasst die Verbindungseinrichtung 12 wenigstens oder genau ein Schaltelement 17, welches mit dem zweiten Verbindungsteil 16 elektrisch und vorzugsweise auch mechanisch verbunden ist. Mittels des Schaltelements 17 sind der zweite Verbindungsteil 16 und somit das Heizelement 9 mit dem Anschluss 7 elektrisch verbindbar und von dem Anschluss 7 trennbar. Da der Verbindungsteil 15 elektrisch mit dem Verbindungsbereich V beziehungsweise mit dem Zellgehäuse 2 verbunden ist, sind der Verbindungsteil 15 und somit das Verbindungselement 14 insgesamt unter Vermittlung des Zellgehäuses 2 elektrisch mit dem Anschlusselement 11 und somit mit dem Heizelement 9 verbunden. Außerdem ist das Schaltelement 17 elektrisch mit dem Verbindungselement 14 verbunden.

Die Verbindungseinrichtung 12 weist darüber hinaus ein zweites Verbindungselement 18 auf, welches einen aus einem dritten Werkstoff gebildeten und mit dem Schaltelement 17 elektrisch und vorzugsweise auch mechanisch verbundenen dritten Verbindungsteil 19 und einen elektrisch sowie vorzugsweise auch mechanisch mit dem dritten Verbindungsteil 19 verbundenen und aus einem von dem dritten Werkstoff unterschiedlichen vierten Werkstoff gebildeten vierten Verbindungsteil 20 aufweist, welcher außerhalb des Zellgehäuses 2 elektrisch mit dem Anschluss 7 verbunden ist. Vorzugsweise handelt es sich bei dem dritten Werkstoff um Kupfer, und vorzugsweise handelt es sich bei dem vierten Werkstoff um Aluminium.

Außerdem ist der Verbindungsteil 15 mechanisch mit dem Zellgehäuse 2, insbesondere mit dem Gehäuseteil 4 verbunden, und vorzugsweise ist der Verbindungsteil 20 mechanisch mit dem Anschluss 7 verbunden. Insgesamt ist erkennbar, dass der Anschlusselement 11 und somit das Heizelement 9 über das Zellgehäuse 2, das Verbindungselement 14, das Schaltelement 17 und das Verbindungselement 18 mit mittels der Speichermittel 6 gespeicherter und von den Speichermitteln 6 über den Anschluss 7 bereitgestellter elektrischer Energie versorgt werden und dadurch betrieben werden kann. Das Verbindungselement 14 weist dabei einen gebogenen beziehungsweise bogenförmigen Übergangsbereich UB auf, sodass sich die Verbindungsteile 15 und 16 entlang einer in Fig. 2 durch einen Doppelpfeil 21 veranschaulichten Richtung zumindest teilweise gegenseitig überlappen. Somit ist der Verbindungsteil 15 entlang der durch den Doppelpfeil 21 veranschaulichten Richtung zwischen dem Zellgehäuse 2 und dem Verbindungsteil 16 angeordnet.

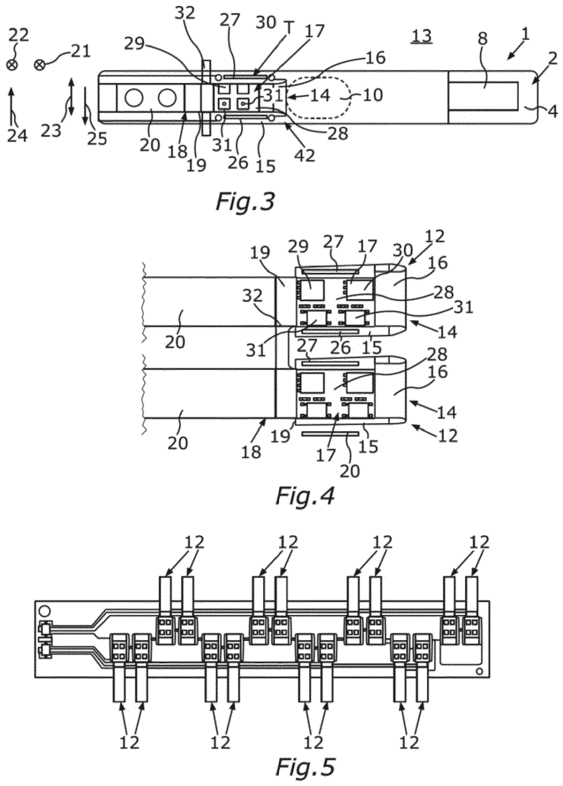

Außerdem ist es vorgesehen, dass das Schaltelement 17 und der Verbindungsteil 16 auf einer dem Zellgehäuse 2 in eine durch einen Pfeil 22 veranschaulichte erste Richtung abgewandten Seite S des ersten Verbindungsteils 15 angeordnet sind. Wie aus Fig. 3 erkennbar ist, ist zumindest ein Teilbereich T des ersten Verbindungsteils 15 entlang einer in Fig. 3 durch einen Doppelpfeil 23 veranschaulichten und vorliegend senkrecht zu der durch den Pfeil 22 veranschaulichten ersten Richtung verlaufenden zweiten Richtung breiter als der Schaltelement 17 und als der Verbindungsteil 16. Hierdurch überragt zumindest der Teilbereich T das Schaltelement 17 und den Verbindungsteil 16 in eine senkrecht zur ersten Richtung verlaufenden und in Fig. 3 durch einen Pfeil 24 veranschaulichte dritte Richtung und in eine senkrecht zur ersten Richtung verlaufende und in Fig. 3 durch einen Pfeil 25 veranschaulichte vierte Richtung, welche der dritten Richtung entgegengesetzt ist. Dabei ist der erste Verbindungsteil 15 in dem Teilbereich T mit dem Zellgehäuse 2, insbesondere mit dem Verbindungsbereich V, mechanisch und elektrisch verbunden. Mit anderen Worten ist der Teilbereich T in die durch den Pfeil 22 veranschaulichte erste Richtung überdeckungsfrei zu dem Schaltelement 17 und zu dem Verbindungsteil 16 angeordnet, sodass der Teilbereich T von der Seite S her auf besonders einfache Weise mit dem Zellgehäuse 2 verschweißt und dadurch elektrisch und mechanisch mit dem Zellgehäuse 2 verbunden werden kann. Diesbezüglich sind in Fig. 3 jeweilige Schweißnähte 26 und 27 veranschaulicht, entlang welchen der Verbindungsteil 15 mit dem Zellgehäuse 2 verschweißt ist.

Besonders gut aus Fig. 4 und 5 ist erkennbar, dass das Schaltelement 17 eine Platine 28 aufweist, auf welcher zwei elektrisch mit der Platine 28 verbundene und beispielsweise als MOSFETs ausgebildete Schalter 29 und 30 des Schaltelements 17 angeordnet sind. Die Schalter 29 und 30 sind dabei an der Platine 28 gehalten. Den jeweiligen Schaltern 29 beziehungsweise 30 ist wenigstens oder genau ein Optokoppler 31 zugeordnet, mittels welchem ein Umschalten des jeweils zugeordneten Schalters 29 beziehungsweise 30 bewirkt werden kann. Auch die Optokoppler 31 sind an der Platine 28 gehalten. Dabei ist die Platine 28 zumindest elektrisch sowie vorzugsweise auch mechanisch mit den Verbindungsteilen 16 und 19 verbunden.

Außerdem weist die Speicherzelle 1 wenigstens einen elastisch verformbaren und elektrisch mit der Platine 28 verbundenen elektrischen Leiter 32 auf, welcher weniger steif als die Platine 28 ist. Mit anderen Worten ist die Platine 28 steifer als der elektrische Leiter 32 ausgebildet. Über den elektrischen Leiter 32 ist die Platine 28 mit wenigstens einer weiteren Komponente des Energiespeichers elektrisch verbindbar oder verbunden. Bei dieser weiteren Komponente handelt es sich - wie aus Fig. 4 und 5 erkennbar ist - um wenigstens eine Platine eines Schaltelements einer anderen der Speicherzellen des Energiespeichers, sodass beispielsweise die Platinen der Schaltelemente der Speicherzellen des Energiespeichers über den elektrischen Leiter 32 besonders vorteilhaft elektrisch miteinander verbunden werden können. Kommt es beispielsweise zu thermisch bedingten Relativbewegungen zwischen den Speicherzellen, so kommt es zu Veränderungen eines Abstands zwischen den Speicherzellen. Der elastisch verformbare elektrische Leiter 32 kann diese Relativbewegungen elektrisch mit ausführen, indem der elektrische Leiter 32 durch die Relativbewegungen elastisch und somit zerstörungsfrei verformt wird. Dadurch können die Platinen der Speicherzellen trotz ihrer Relativbewegungen über den elektrischen Leiter 32 zumindest elektrisch miteinander verbunden bleiben.

Die Seite S weist beispielsweise in Einbaulage der Speicherzelle 1 in Fahrzeughochrichtung nach oben, sodass dadurch, dass der Verbindungsteil 15 breiter als das Schaltelement 17 ist, der Verbindungsteil 15 von oben auf besonders einfache Weise mit dem Zellgehäuse 2 verschweißt werden kann.

In vollständig hergestelltem Zustand des Energiespeichers sind die Speicherzellen, insbesondere über ihre Anschlüsse, elektrisch miteinander verbunden. Hierzu ist ein auch als Zellkontaktierungssystem bezeichnetes Zellkontaktiersystem (ZKS) vorgesehen, über welches die Speicherzellen elektrisch miteinander verbunden sind. Insbesondere sind die jeweiligen Anschlüsse der jeweiligen Speicherzellen über das Zellkontaktiersystem elektrisch miteinander verbunden. Die jeweilige Verbindungseinrichtung 12 ist dabei entlang der durch den Doppelpfeil 21 veranschaulichten Richtung unterhalb des Zellkontaktiersystems und somit zwischen dem Zellkontaktiersystem und dem jeweiligen Zellgehäuse 2 angeordnet. Mit anderen Worten kann die jeweilige Verbindungseinrichtung 12 unter das Zellkontaktiersystem tauchen, sodass die Verbindungseinrichtung 12 das Zellkontaktiersystem beziehungsweise dessen Montage nicht beeinträchtigt. Somit kann der Energiespeicher wahlweise mit den Verbindungseinrichtungen 12 ausgestattet werden, oder die Verbindungseinrichtungen 12 können einfach weggelassen werden, wobei in beiden Fällen das Zellkontaktiersystem auf gleiche Weise montiert werden kann.

### Bezugszeichenliste

- 1: Speicherzelle
- 2: Zellgehäuse
- 3: Gehäuseteil
- 4: Gehäuseteil
- 5: Aufnahmeraum
- 6: Speichermittel
- 7: Anschluss
- 8: Anschluss
- 9: Heizelement
- 10: Berstmembran
- 11: Anschlusselement
- 12: Verbindungseinrichtung
- 13: Umgebung
- 14: Verbindungselement
- 15: erster Verbindungsteil
- 16: zweiter Verbindungsteil
- 17: Schaltelement
- 18: zweites Verbindungselement
- 19: dritter Verbindungsteil
- 20: vierter Verbindungsteil
- 21: Doppelpfeil
- 22: Pfeil
- 23: Doppelpfeil
- 24: Pfeil
- 25: Pfeil
- 26: Schweißnaht
- 27: Schweißnaht
- 28: Platine
- 29: Schalter
- 30: Schalter
- 31: Optokoppler
- 32: elektrischer Leiter
- S: Seite
- T: Teilbereich
- UB: Übergangsbereich
- V: Verbindungsbereich

## Patentansprüche

1. Speicherzelle (1) für einen Energiespeicher eines Kraftfahrzeugs, mit einem Zellgehäuse (2), in welchem Speichermittel (6) zum Speichern von elektrischer Energie aufgenommen sind, mit wenigstens einem außerhalb des Zellgehäuses (2) angeordneten Anschluss (7), über welchen die mittels der Speichermittel (6) gespeicherte elektrische Energie von den Speichermitteln (6) bereitstellbar ist, und mit wenigstens einem innerhalb des Zellgehäuses (2) angeordneten elektrischen Heizelement (9) zum Beheizen der Speicherzelle (1),
**dadurch gekennzeichnet, dass**:
- das Zellgehäuse (2) einen Verbindungsbereich (V) aufweist, in welchem das Heizelement (9) innerhalb des Zellgehäuses (2) elektrisch mit dem Zellgehäuse (2) verbunden ist; und
- wenigstens eine Verbindungseinrichtung (12) vorgesehen ist, welche aufweist:
∘ zumindest ein Verbindungselement (14), welches einen aus einem ersten Werkstoff gebildeten und außerhalb des Zellgehäuses (2) elektrisch mit dem Zellgehäuse (2) verbundenen ersten Verbindungsteil (15) und einen elektrisch mit dem ersten Verbindungsteil (15) verbundenen und aus einem von dem ersten Werkstoff unterschiedlichen zweiten Werkstoff gebildeten zweiten Verbindungsteil (16) aufweist; und
∘ wenigstens ein mit dem zweiten Verbindungsteil (16) elektrisch verbundenes Schaltelement (17), mittels welchem der zweite Verbindungsteil (16) mit dem Anschluss (7) elektrisch verbindbar und von dem Anschluss (7) trennbar ist.

2. Speicherzelle (1) nach Anspruch 1,
**dadurch gekennzeichnet, dass**
das Schaltelement (17) auf einer dem Zellgehäuse (2) in eine erste Richtung (22) abgewandten Seite (S) des ersten Verbindungsteils (15) angeordnet ist, wobei zumindest ein Teilbereich (T) des ersten Verbindungsteils (15) das Schaltelement (17) in eine schräg oder senkrecht zur ersten Richtung (22) verlaufende zweite Richtung (24, 25) überragt, und wobei der erste Verbindungsteil (15) in dem Teilbereich (T) mit dem Zellgehäuse (2) mechanisch und elektrisch verbunden ist.

3. Speicherzelle (1) nach Anspruch 2,
**dadurch gekennzeichnet, dass**
der erste Verbindungsteil (15) in dem Teilbereich (T) mit dem Zellgehäuse (2) (2) verschweißt und dadurch elektrisch und mechanisch mit dem Zellgehäuse verbunden ist.

4. Speicherzelle (1) nach Anspruch 3,
**dadurch gekennzeichnet, dass**
der erste Verbindungsteil (15) von der Seite (S) her mit dem Zellgehäuse (2) verschweißt ist.

5. Speicherzelle (1) nach einem der vorhergehenden Ansprüche,
**dadurch gekennzeichnet, dass**
die Verbindungseinrichtung (12) ein zweites Verbindungselement (18) aufweist, welches einen aus einem dritten Werkstoff gebildeten und mit dem Schaltelement (17) elektrisch verbundenen dritten Verbindungsteil (19) und einen elektrisch mit dem dritten Verbindungsteil (19) verbundenen und aus einem von dem dritten Werkstoff unterschiedlichen vierten Werkstoff gebildeten vierten Verbindungsteil (20) aufweist, welcher außerhalb des Zellgehäuses (2) elektrisch mit dem Anschluss (7) verbunden ist.

6. Speicherzelle (1) nach Anspruch 5,
**dadurch gekennzeichnet, dass**
der erste Werkstoff dem vierten Werkstoff entspricht.

7. Speicherzelle (1) nach Anspruch 5 oder 6,
**dadurch gekennzeichnet, dass**
der zweite Werkstoff dem dritten Werkstoff entspricht.

8. Speicherzelle (1) nach einem der vorhergehenden Ansprüche,
**dadurch gekennzeichnet, dass**
das Schaltelement (17) eine Platine (28) aufweist, auf welcher wenigstens ein, insbesondere elektrisch mit der Platine (28) verbundener, Schalter (29) des Schaltelements (17) angeordnet ist, wobei die Platine (28) elektrisch mit dem zweiten Verbindungsteil (16) verbunden ist.

9. Speicherzelle (1) nach Anspruch 8 in dessen Rückbezug auf einen der Ansprüche 5 bis 7,
**dadurch gekennzeichnet, dass**
die Platine (28) elektrisch mit dem dritten Verbindungsteil (19) verbunden ist.

10. Speicherzelle (1) nach Anspruch 8 oder 9,
**dadurch gekennzeichnet, dass**
wenigstens ein elastisch verformbarer und elektrisch mit der Platine (28) verbundener elektrischer Leiter (32) vorgesehen ist, über welchen die Platine (28) mit wenigstens einer weiteren Komponente elektrisch verbindbar ist, wobei die Platine (28) steifer als der Leiter (32) ist.

11. Energiespeicher für ein Kraftfahrzeug, mit wenigstens einer Speicherzelle (1) nach einem der vorhergehenden Ansprüche.

## Claims

1. Storage cell (1) for an energy store of a motor vehicle, having a cell housing (2), in which storage means (6) for storing electrical energy are accommodated, having at least one terminal (7) which is arranged externally to the cell housing (2) and via which the electrical energy which is stored by way of the storage means (6) can be delivered by the storage means (6), and having at least one electric heating element (9), which is arranged within the cell housing (2), for the heat-up of the storage cell (1),
**characterized in that**:
- the cell housing (2) comprises a connection region (V), in which the heating element (9), within the cell housing (2), is electrically connected to the cell housing (2); and
- at least one connection device (12) is provided, which comprises:
o at least one connection element (14), which comprises a first connection part (15) which is formed from a first material and, externally to the cell housing (2), is electrically connected to the cell housing (2), and a second connection part (16), which is electrically connected to the first connection part (15) and is formed from a second material which differs from the first material; and
o at least one switching element (17) which is electrically connected to the second connection part (16) and by means of which the second connection part (16) is electrically connectable to the terminal (7) and isolatable from the terminal (7).

2. Storage cell (1) according to Claim 1,
**characterized in that**
the switching element (17) is arranged on a side (S) of the first connection part (15) which is averted from the cell housing (2) in a first direction (22), wherein at least a subregion (T) of the first connection part (15) projects beyond the switching element (17) in a second direction (24, 25) which is oriented obliquely or perpendicularly to the first direction (22), and wherein the first connection part (15), in the subregion (T), is mechanically and electrically connected to the cell housing (2).

3. Storage cell (1) according to Claim 2,
**characterized in that**
the first connection part (15), in the subregion (T), is welded to the cell housing (2) (2), and is thus electrically and mechanically connected to the cell housing.

4. Storage cell (1) according to Claim 3,
**characterized in that**
the first connection part (15), from the side (S), is welded to the cell housing (2).

5. Storage cell (1) according to one of the preceding claims,
**characterized in that**
the connection device (12) comprises a second connection element (18), which comprises a third connection part (19) which is formed from a third material and is electrically connected to the switching element (17), and a fourth connection part (20), which is electrically connected to the third connection part (19) and is formed from a fourth material which differs from the third material and which, externally to the cell housing (2), is electrically connected to the terminal (7).

6. Storage cell (1) according to Claim 5,
**characterized in that**
the first material corresponds to the fourth material.

7. Storage cell (1) according to Claim 5 or 6,
**characterized in that**
the second material corresponds to the third material.

8. Storage cell (1) according to one of the preceding claims,
**characterized in that**
the switching element (17) comprises a circuit board (28), on which at least one switch (29) of the switching element (17), which switch is in particular electrically connected to the circuit board (28), is arranged, wherein the circuit board (28) is electrically connected to the second connection part (16).

9. Storage cell (1) according to Claim 8 with reference to one of Claims 5 to 7,
**characterized in that**
the circuit board (28) is electrically connected to the third connection part (19).

10. Storage cell (1) according to Claim 8 or 9,
**characterized in that**
at least one elastically deformable electrical conductor (32) is provided, which is electrically connected to the circuit board (28) and by means of which the circuit board (28) is electrically connectable to at least one further component, wherein the circuit board (28) is more rigid than the conductor (32).

11. Energy store for a motor vehicle, having at least one storage cell (1) according to one of the preceding claims.

## Revendications

1. Cellule d'accumulation (1) destinée à un accumulateur d'énergie d'un véhicule automobile, ladite cellule d'accumulation comprenant un boîtier de cellule (2) dans lequel sont logés des moyens d'accumulation (6) destinées à accumuler de l'énergie électrique, au moins une borne (7) disposée à l'extérieur du boîtier de cellule (2) et permettant aux moyens d'accumulation (6) de fournir de l'énergie électrique accumulée à l'aide des moyens d'accumulation (6), et au moins un élément chauffant électrique (9) disposé à l'intérieur du boîtier de cellule (2) et destiné à chauffer la cellule d'accumulation (1),
**caractérisée en ce que** :
- le boîtier de cellule (2) comporte une zone de liaison (V) dans laquelle l'élément chauffant (9) situé à l'intérieur du boîtier de cellule (2) est relié électriquement au boîtier de cellule (2) ; et
- au moins un dispositif de liaison (12) est prévu qui comporte :
∘ au moins un élément de liaison (14) qui comporte une première partie de liaison (15) formée d'un premier matériau et reliée électriquement au boîtier de cellule (2) à l'extérieur du boîtier de cellule (2) et une deuxième partie de liaison (16) reliée électriquement à la première partie de liaison (15) et formée d'un deuxième matériau différent du premier matériau ; et
∘ au moins un élément de commutation (17) relié électriquement à la deuxième partie de liaison (16) et permettant de relier électriquement la deuxième partie de liaison (16) à la borne (7) et de la séparer de la borne (7).

2. Cellule d'accumulation (1) selon la revendication 1,
**caractérisée en ce que**
l'élément de commutation (17) est disposé sur un côté (S) de la première partie de liaison (15) qui est à l'opposé du boîtier de cellule (2) dans une première direction (22), au moins une zone (T) de la première partie de liaison (15) faisant saillie de l'élément de commutation (17) dans une deuxième direction (24, 25) qui s'étend obliquement ou perpendiculairement à la première direction (22), et la première partie de liaison (15) étant reliée mécaniquement et électriquement au boîtier de cellule (2) dans la zone (T) .

3. Cellule d'accumulation (1) selon la revendication 2,
**caractérisée en ce que**
la première partie de liaison (15) est soudée au boîtier de cellule (2) (2) dans la zone (T) et est ainsi reliée électriquement et mécaniquement au boîtier de cellule.

4. Cellule d'accumulation (1) selon la revendication 3,
**caractérisée en ce que**
la première pièce de liaison (15) est soudée au boîtier de cellule (2) depuis le côté (S).

5. Cellule d'accumulation (1) selon l'une des revendications précédentes,
**caractérisée en ce que**
le dispositif de liaison (12) comporte un deuxième élément de liaison (18), qui comporte une troisième partie de liaison (19) qui est formée d'un troisième matériau et qui est reliée électriquement à l'élément de commutation (17) et une quatrième partie de liaison (20) qui est reliée électriquement à la troisième partie de liaison (19), qui est formée d'un quatrième matériau différent du troisième matériau et qui est reliée électriquement à la borne (7) à l'extérieur du boîtier de cellule (2).

6. Cellule d'accumulation (1) selon la revendication 5,
**caractérisée en ce que**
le premier matériau correspond au quatrième matériau.

7. Cellule d'accumulation (1) selon la revendication 5 ou 6,
**caractérisée en ce que**
le deuxième matériau correspond au troisième matériau.

8. Cellule d'accumulation (1) selon l'une des revendications précédentes,
**caractérisée en ce que**
l'élément de commutation (17) comporte un circuit imprimé (28) sur lequel est disposé au moins un commutateur (29) de l'élément de commutation (17), en particulier relié électriquement au circuit imprimé (28), le circuit imprimé (28) étant relié électriquement à la deuxième partie de liaison (16).

9. Cellule d'accumulation (1) selon la revendication 8 dans en référence à l'une des revendications 5 à 7,
**caractérisée en ce que**
le circuit imprimé (28) est relié électriquement à la troisième partie de liaison (19).

10. Cellule d'accumulation (1) selon la revendication 8 ou 9,
**caractérisée en ce que**
au moins un conducteur électrique (32) élastiquement déformable et relié électriquement au circuit imprimé (28) est prévu qui permet de relier électriquement le circuit imprimé (28) à au moins un autre composant, le circuit imprimé (28) étant plus rigide que le conducteur (32).

11. Accumulateur d'énergie destiné à un véhicule automobile, ledit accumulateur d'énergie comprenant au moins une cellule d'accumulation (1) selon l'une des revendications précédentes.
